# EUROPEAN PATENT SPECIFICATION

(11) **EP 1 150 812 B1**
(45) Date of publication and mention of the grant of the patent: **02.06.2004**
(21) Application number: 00901363.2
(22) Date of filing: 10.01.2000
(51) Int. Cl.: B27B 13/00

(54) **METHOD AND DEVICE FOR CUTTING WOOD**
VERFAHREN UND VORRICHTUNG ZUM SCHNEIDEN VON HOLZ
PROCEDE ET DISPOSITIF DE DECOUPE DE BOIS

(30) Priority: 11.01.1999 SE 9900044; 11.01.1999 SE 9900045
(43) Date of publication of application: 07.11.2001
(73) Proprietor: Renholmens Mekaniska Verkstad AB, 930 47 Byske (SE)
(72) Inventor: LINDBERG, Bertil, S-930 47 Byske (SE)
(74) Representative: Onn, Thorsten
(86) International application number: PCT/SE2000/000025
(87) International publication number: WO 2000/041860

(56) References cited:
- DE-A1- 3 820 148
- SE-B- 364 210
- SE-B- 390 502
- US-A- 5 680 888

## Description

The current invention concerns a method and a device according to the preamble portions of claims 1, 2 and 8.

As is well known in the sawmill industry, the original pieces of timber are cut in order to remove defective parts and/or to adapt the pieces of timber into certain quality classes. This occurs in special so-called trimming mills equipped with a large number of cross-cutting saws. The trimming can occur using one cross-cutting saw or using several cross-cutting saws arranged axially next to each other. Module cutting means that the timber pieces are cut to standard lengths that comprise a multiple of a fixed standard length, normally 300 mm, although multiples of another length are possible. The trimming proceeds by the intended cross-cutting saw of the cross-cutting saws that lie axially next to each other being lowered onto the piece of timber while it is transported past in a crosswise manner. The transport of the pieces of timber occurs in a known manner with the aid of a chain conveyor equipped with driver pins, as is known for example from US-A-5,680,888.

Problems arise at higher transport speeds, that is, at higher handling speeds in the trimming device, with making the pieces of timber move past the cross-cutting saws in the desired manner. The pieces of timber are seldom flat and plane, which is why they are easily disarranged at high transport speeds, for example, 160 strokes. In order to implement this striving for a higher rate of the pieces of timber through the trimming mill than has hitherto been possible, the current invention has been produced, and the problems associated with transport speed have been solved according to the characteristics sections of the claims.

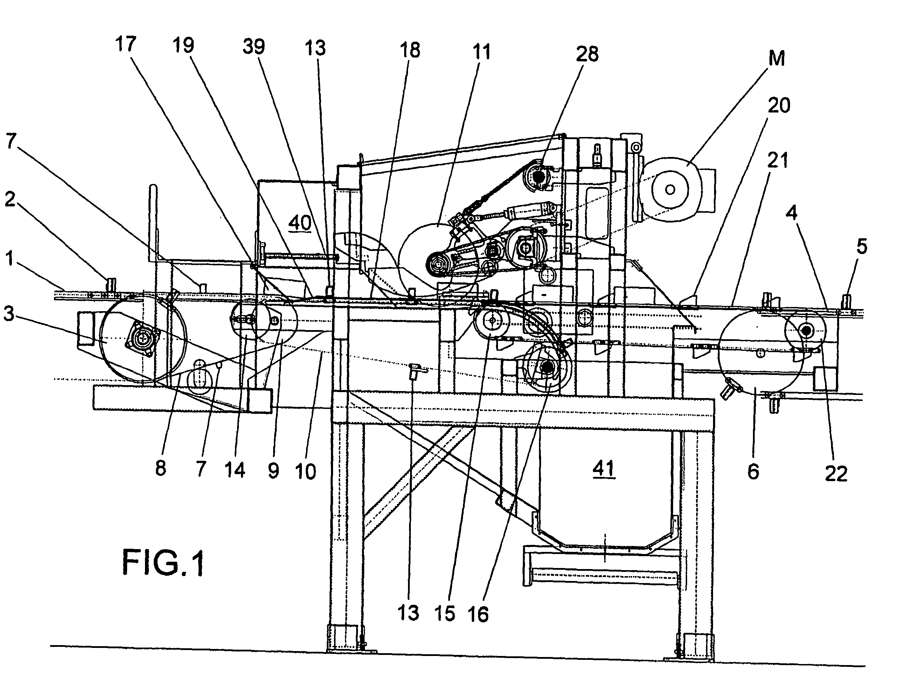

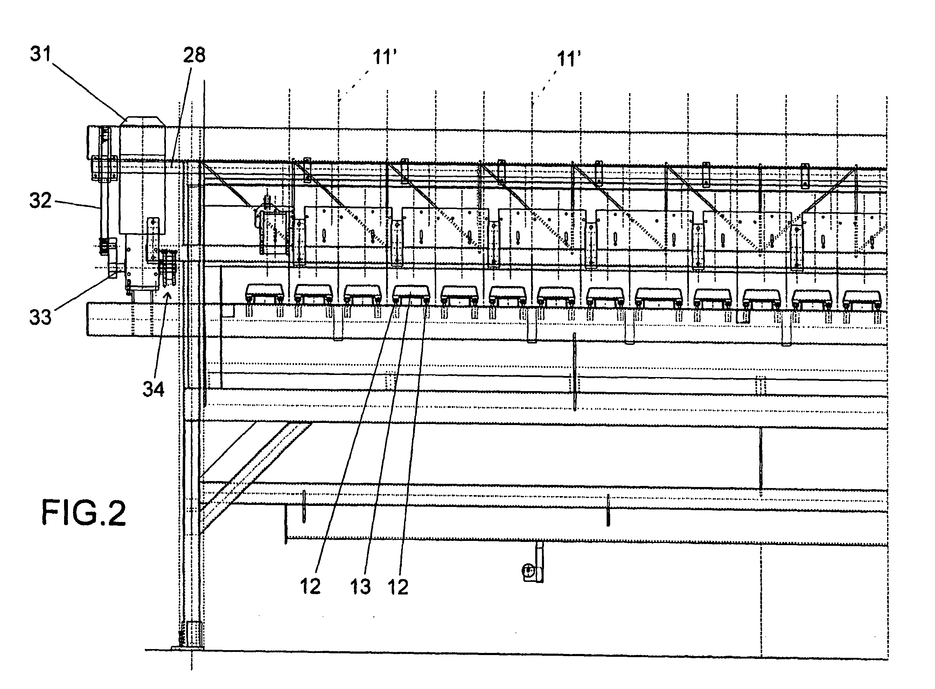

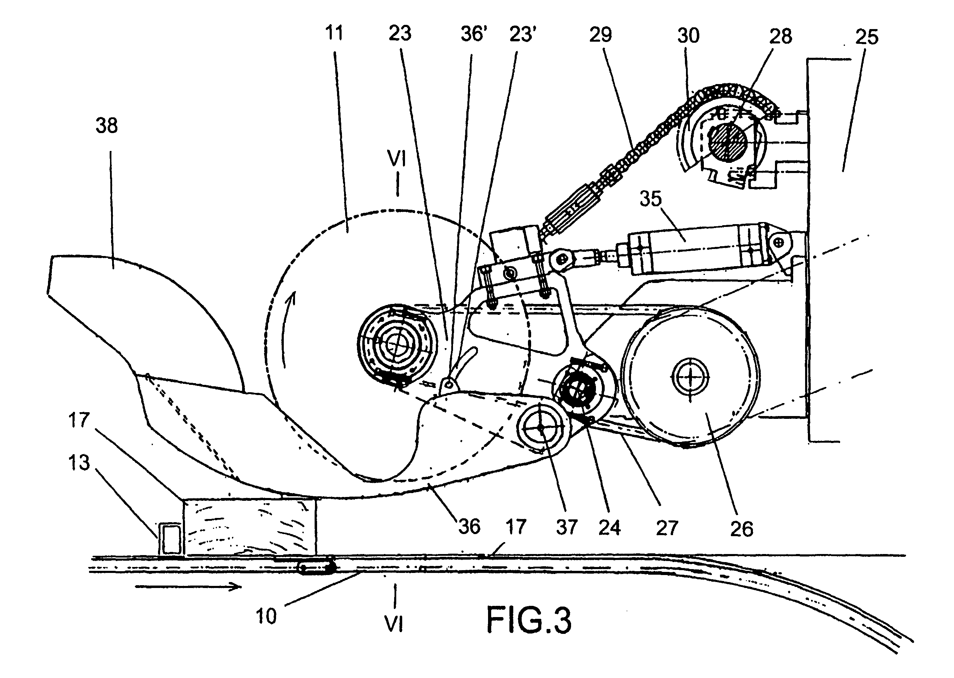

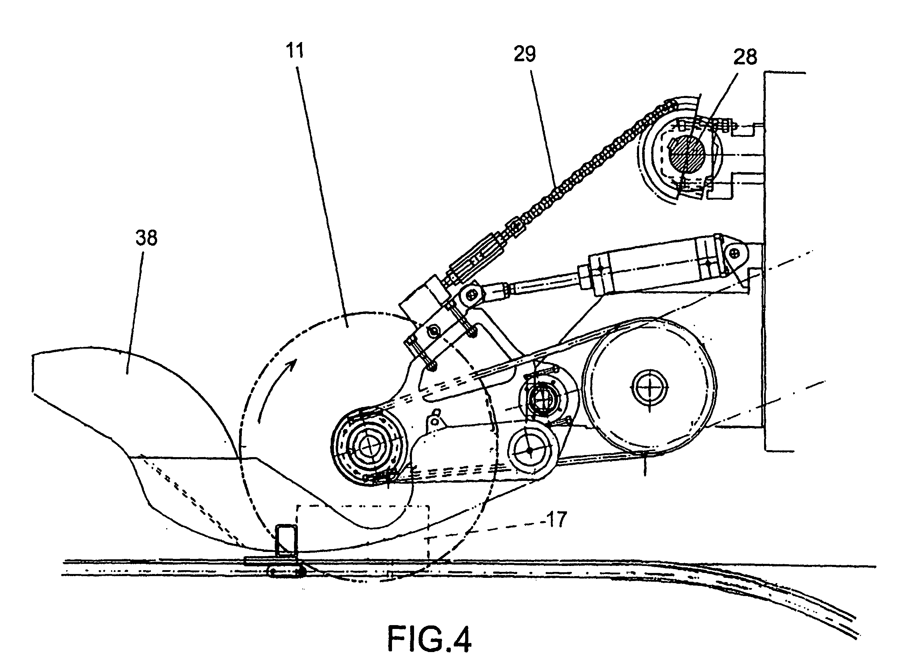

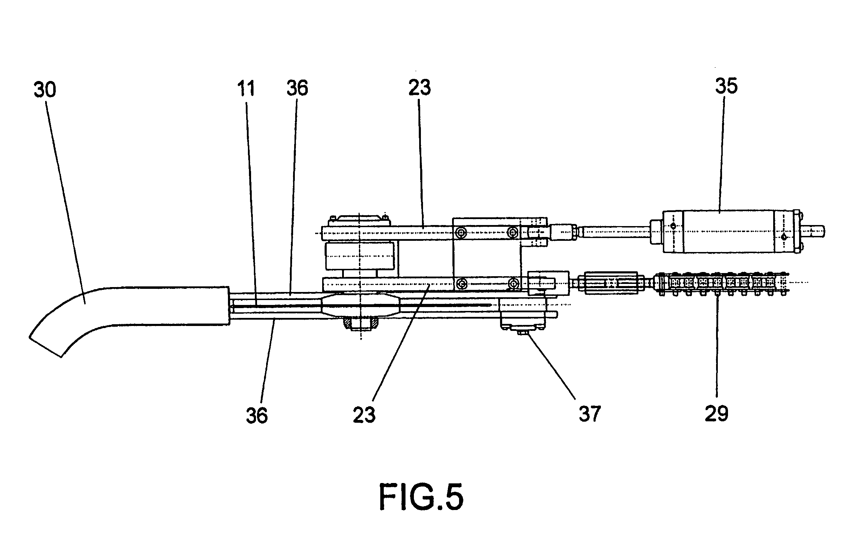

The invention will be described more closely in the form of an embodiment and with reference to the drawings, of which **Fig. 1** shows an example of a trimming mill according to the invention, seen from the side, **Fig. 2** shows a partial view of the trimming mill according to Fig. 1, seen across the direction of transport of the pieces of timber, **Fig. 3** and **Fig. 4** show from the side different positions of a cross-cutting saw that is part of the trimming mill, **Fig. 5** shows schematically from above the cross-cutting saw that is part of the trimming mill according to Fig. 3 and Fig. 4, and **Fig. 6** shows schematically a section along the line VI-VI in Fig. 3.

In the trimming mill, I denotes an infeed conveyor in the form of a chain conveyor equipped with driver pins 2. This conveyor I runs over an idle-wheel 3. The outfeed conveyor 4 also consists of a chain conveyor equipped with driver pins 5. The outfeed conveyor runs over an idle-wheel 6. A belt-conveyor equipped with driver pins 7 or a chain conveyor 8 with driver pins 7 (only two of which are shown) runs over idle-wheels located coaxially with idle-wheel 3. The chain conveyor 8 runs in the feed direction downstream over idle-wheel 9. A so-called chain step conveyor 10 is arranged to run from the chain conveyor 8 and onwards under the cross-cutting saws 11 that are part of the trimming mill and arranged axially next to each other. "Chain step conveyor" should be understood to mean a conveyor that consists of chains 12 arranged in pairs (see Fig. 2) and that are connected to each other by means of a driver pin 13. The chain step conveyor 10 runs around idle-wheel 14 and around idle-wheel 16 in such a way that the chain step conveyor is sloping backwards in an arc after the cross-cutting saw 11, guided by curved rails (not shown). As is shown in Fig. 1, the piece of timber, which is here denoted by 17, after passing the chain conveyor 8 and its idle-wheel 9 will land on a upwards sloping ramp 19 on a plate 18, which passes underneath the cross-cutting saws 11 and lies somewhat higher than the chains in the chain step conveyor 10. It is appropriate that the plate 18, which can be said to have the form of a continuous belt between the chain step conveyors 10, bends downwards after the cross-cutting saw 11. Between the chain step conveyor 10, before it bends away downwards, and the outfeed conveyor 4 runs another conveyor 21 equipped with driver pins 20. The conveyor 21 runs over idle-wheels 15 and 22.

As is shown in more detail in Figs. 3 and 4, the cross-cutting saws 11, which are axially arranged next to each other, are each suspended from an arm 23, jointed to pivot vertically on a bearing 24 on part of the frame 25. A driving plate 26 is attached by bearings in this part of the frame, which driving plate drives the cross-cutting saw 11 by one or more cone belts 27. The arms 23 and thus the cross-cutting saws 11 are borne by a common forwards and backwards rotating axle 28, each by a chain 29, which runs over an idle-pulley 30 on the axle 28. The axle 28 is driven by a motor 31 (see Fig. 2) by a connecting rod mechanism, suggested by 32. It should be noted that the motor 31 has not been drawn in Fig. 1. The drive axis 33 from the motor is provided with two chain wheels, suggested by 34, which are connected to the idle-wheels 16 by driving chains, for driving the chain step conveyor 10, and to the idle-wheels 22 for driving the conveyor 21. In this way, the backwards and forwards movement of the axis 28 mechanism will move in synchrony with the conveyors 10 and 21 with the aid of the connecting rod, and the conveyors 10 and 21 will themselves be driven in synchrony in order to ensure that the relative positions of the driver pins 13 and 20 arranged on these are exactly the same, allowing the error-free transport of the piece of timber through the trimming mill.

A piston cylinder device 35 is arranged between the arm 23 and the frame 25. This device works in both directions, that is, the cylinder of the device 35 can be pressurised on either side as required.

A down-deflecting means 36 consisting of arc-shaped parts on each side of the respective cross-cutting saw (see Fig. 5), is suspended to pivot by an axle 37 on the arm 23. The downwards pivoting motion of the down-deflecting means 36 relative to the cross-cutting saw 11 is limited by a device, for example, a slit 23' in the arm 23 and a peg 36' that is fixed to the down-deflecting means 36. Other types of arrangement can be imagined, for example, a chain, attached to the arm 23 and the down-deflecting means 36. The cross-cutting saw I rotates in such a direction - as shown by the arrow - that its lower periphery, the one that faces the conveyor and the piece of timber, moves in the opposite direction to the direction of motion of the piece of timber 17. The sawdust that is formed during cutting is removed by a channel 38 which is attached to the down-deflecting means 36, and which, as is shown in Fig. 5, is somewhat curved in order to guide and discharge or blow out the sawdust formed into a collection box 40 equipped with a crosswise travelling outfeed conveyor 39 (see Fig. 1). At the same time as the down-deflecting means 36 acts to hold down the piece of timber 17 during sawing, it also ensures that sawdust is removed for extraction from the cutting region.

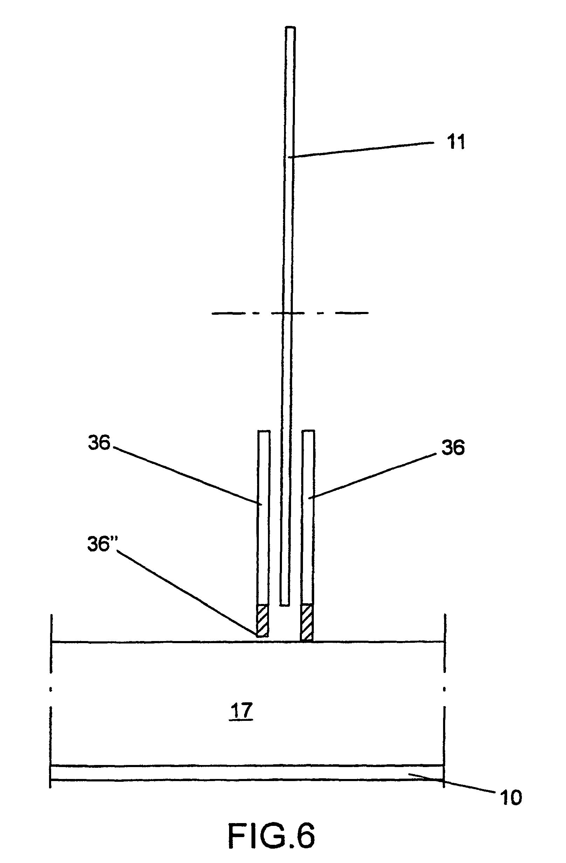

A major disadvantage is the damage that can arise on the pieces of timber caused by mechanical damage during the sawing. This damage is usually caused by various types of down-deflecting means that are used in the technology. In order to minimise such damage, according to an embodiment of the invention, the arc-formed part on one side of the cross-cutting saw 11 can be bevelled, that is, made somewhat shallower than the arc-shaped part on the other side of the cross-cutting saw, which in practice means that most of the force that holds the piece of timber down acts on one side of the cross-cutting saw. This in turn means that the risk for mechanical damage is reduced for the part of the piece of timber whose end has passed under the bevelled part of the means of holding. It is appropriate that it thereby is a question of those pieces of timber that are to proceed to sorting. This arrangement with one of the arc-formed parts of the down-deflecting means 36 bevelled on its lower side is shown in Fig. 6. The left hand side shown in the figure has an exaggerated bevel 36", which bevel, as mentioned, entails a greater holding down force acting from the right-hand side part in the figure onto the piece of timber 17.

The device for controlling the trimming mill is based on a computer, in a known fashion, while parts of the trimming mill's manoeuvring device can be said to be the axle 28 and the piston and cylinder device 35. The motor 31 (see Fig. 2), which works synchronously with the driving motors for the infeed and outfeed conveyors 1 and 4, drives the axle 28 forwards and backwards, which enables the chains 29 that are attached to the cross-cutting saws in the trimming mill to raise and lower, respectively, the cross-cutting saws 11 via their arms 23. Normally, one or a pair of cross-cutting saws 11 chosen by the trimmer are lowered for cutting, which can be achieved by pressurising the cylinders 35 such that all the cross-cutting saws 11 are held in the raised position except the one or those several chosen cross-cutting saws 11 that are allowed to reach the lowered position by the cylinder 35 that is connected to them. This lowering of the cross-cutting saw occurs in time with the turning of the axle 28 (clockwise according to Fig. 3), and it occurs by pressurising of the cylinder 35 so that the force of its piston acts in the lowering direction of the cross-cutting saw. The motion of the cross-cutting saw 11 is thus completely controlled by the courses of motion of the axle 28 and of the chain 29, which is stretched all the time by the pressurised piston cylinder device.

The course of motion of the cross-cutting saw 11 is exactly controlled by the axle 28 (with the aid of the chain 29 and the piston cylinder device 35), and this makes it in principle possible to apply the cutting technique that is described in patent number SE 9201285-5 of the applicant at high speed of feeding (160 strokes or higher).

The function of the trimming mill is, briefly, as follows. A piece of timber 17 is transported crosswise in front of the driver pins 2 along the infeed conveyor 1 until it is received by the chain conveyor 8 and the chain conveyor's driver pins 7. When the piece of timber 17 leaves the belt conveyor 8, the piece of timber 17 lands on the ramp 19 of the plate 18 and will by sliding forwards on the plate be fed towards the cross-cutting saw 11 by the driver pins 13 of the chain step conveyor 10. There exists thus a sliding friction between the plate 18 and the piece of timber 17, which contributes to holding the piece of timber 17 against the driver pins 13. The piece of timber 17 is transported onwards to the down-deflecting means 36, which stretches above and in front of the cross-cutting saw 11, and can, for example, lift it, as is shown in Fig. 3. The height relationship between the freely suspended down-deflecting means 36 and the cross-cutting saw is determined by the limiting device 23', 36' and it is thus this that determines when the means 36 for holding down is to engage with the piece of timber during the lowering of the cross-cutting saw. It is only the down-deflecting means 36, in connection with the cross-cutting saw 11 that is currently cutting, that interacts with the piece of timber. The down-deflecting means will now hold the piece of timber 17 against the conveyor 10 even before the cross-cutting saw 11 interacts with the piece of timber 17. This means that the piece of wood is fixed to the conveyor in a very effective manner during the cutting. Another factor that contributes to this fixation at the point of cutting is the fact that the driver pins 13 of the conveyor 10 are arranged relatively closely to the position of the plane of each cross-cutting saw 11. This position is suggested in Fig. 2 by the dash-dot lines 11'.

The cut-off piece has for the full duration of the cutting support from the plate 18, and is fed by the conveyor 10 along its downward sloping part and delivered to a bin 41, equipped at the bottom with, for example, a rubber conveyor, not shown, which leads the cut-off piece crosswise from the trimming mill, while the trimmed piece of timber 17 continues via the conveyor 21 to the outfeed conveyor 4.

As is shown in Fig. 3, the fulcrum 24 of the arm 23 that carries the cross-cutting saw 11 lies separate from the axle of rotation of the driving disk 26, which is driven by a motor M using belts (see Fig. 1). By making the fulcrum 24 of the arm 23 separate from the axle of rotation of the driving disk 26 in the manner shown, the cone belt or cone belts 27 will come into tension as the cross-cutting saw is lowered and will be released from tension when the cross-cutting saw is raised. This means that the load on bearings and on cone belts can be minimised and the lifetime of these increased.

Naturally, the down-deflecting means 36 can within the scope of the invention be suspended to pivot in another manner than the one shown here, for example from the collecting box 40.

## Claims

1. Method for trimming pieces of timber (17) during cutting by means of a number of cross-cutting saws (11) placed axially in a line next to each other and suspended to pivot on arms (23) in a cutting station connected to a trimming mill, the pieces of timber being fed forward at right angles to their length by a conveyor (10) equipped with driver pins (7) at a distance from each other that is determined by the driver pins, whereby one or more cross-cutting saws intended for cutting are lowered for cutting by guidance and manoeuvring devices,
**characterised in that** the respective cross-cutting saws (11) are made to rotate for cutting in such a direction that their lower periphery, the one facing the conveyor (10) and piece of timber (17), moves opposite to the direction of motion of the piece of timber, that a down-deflecting means (36) in association with the respective cross-cutting saw (11) during the lowering of the cross-cutting saw is brought to connect by its lower edge to the upper edge of the piece of timber (17) that is fed forward by the conveyor and upstream of the cross-cutting saw (11) seen with respect to the direction of transport, whereby the piece of timber to be trimmed is pushed under the down-deflecting means by the driver pins (13) of the conveyor during cutting of the piece of timber.

2. Device for trimming pieces of timber (17) during cutting by means of a number of cross-cutting saws (11) placed axially in a line next to each other and suspended to pivot on arms (23) in a cutting station connected to a trimming mill, the pieces of timber being fed forward at right angles to their length by a conveyor (10) equipped with driver pins at a distance from each other that is determined by the driver pins, whereby a cross-cutting saw (11) intended for cutting is lowed for cutting by guidance and manoeuvring devices, **characterised in that** the cross-cutting saw (11) intended for trimming is made to rotate for cutting in such a direction that its lower periphery, the one facing the conveyor (10) and piece of timber (17), moves opposite to the direction of motion of the piece of timber, that a down-deflecting means (36) is suspended to pivot in association with the respective cross-cutting saw (11) in order to come into contact during the lowering with the upper edge of the piece of timber (17) that is to be trimmed, and the lower edge is arranged with a section that reaches in front of the sawing edge of the cross-cutting saw, and has an upward sloping form when viewed against the direction of transport.

3. Device according to claim 2, **characterised in that** the downwards pivoting movement of the down-deflecting means (36) relative to the cross-cutting saw (11) is limited by means (36', 23') that act between the down-deflecting means and the arm (23).

4. Device according to claim 2 or 3 **characterised in that** the down-deflecting means (36) has a form with parts provided on each side of the cross-cutting saw.

5. Device according to claim 4, **characterised in that** the lower edge (36") of the down-deflecting means is arranged so that the part that is provided on one side of the cross-cutting saw is at a greater distance from the upper surface of the piece of timber that is to be trimmed than is the edge of the part of the down-deflecting means (36) that is provided on the other side of the cross-cutting saw.

6. Device according to any of claims 2-5, **characterised in that** the driver pins (13) of the conveyor (10) have an extension crosswise to the direction of the conveyor approximately equal to the distance between cross-cutting saws (11) that lie next to each other.

7. Device according to claim 6 **characterised in that** the conveyor (10) is a chain step conveyor.

8. Device for cutting by means of a number of cross-cutting saws (11) placed axially next to each other in a cutting station connected with a trimming mill for adjusting pieces of timber (17), that are fed forward at right angles to their length by a conveyor (10) equipped with driver pins at distances from each other that are determined by the driver pins (13), whereby the respective cross-cutting saw (11) is suspended on a vertically pivoted arm (23), connected to a frame (25) of the cutting station, for swinging from a raised inactive position to a lowered cutting position by a guidance and control device, **characterised in that** the control device consists partly of a control cylinder (35) that is arranged between each arm (23) and the frame (25), and that is designed to maintain the relevant cross-cutting saw (11) in the raised position or to allow lowering of the cross-cutting saw under direction of the control device, and partly of an axle (28) that can be turned forwards and backwards with a fixed range of motion, carried by a frame (25) and equipped with driver pin devices 30 directed radially outwards, by which the relevant arm (23) is connected by means of a link (29) that makes the lowering and raising of the cross-cutting saws (11) possible when the axle is turned, whereby the lowering of the cross-cutting saws is forced and controlled by the range of motion of the axle.

9. Device according to claim 8 **characterised in that** the relevant control cylinder (35) is a pneumatic piston and cylinder arrangement, that is pressurised during the lowering of and cutting by the cross-cutting saw (11).

10. Device according to claim 8 or 9 **characterised in that** the link consists of a chain (29).

11. Device according to any of claims 8-10 **characterised in that** a motor (31) is arranged to drive the axle (28) and the conveyor (10).

## Patentansprüche

1. Verfahren zum Ablängen von Holzstücken (17) während des Zuschnitts mittels einer Anzahl von Ablängsägen (11), welche in einer Linie axial nebeneinander angeordnet sind und in einer mit einem Ablängwerk verbundenen Schneidestation schwenkbar an Armen (23) aufgehängt sind, wobei die Holzstücke rechtwinklig zu ihrer Länge durch einen Förderer (10) mit Mitnehmern (7) in einem von den Mitnehmern bestimmten gegenseitigen Abstand vorgeschoben werden, und wobei eine oder mehrere zum Schneiden bestimmte Ablängsägen durch Führungs- und Manövriervorrichtungen abgesenkt werden,
**dadurch gekennzeichnet, dass** die zum Ablängen bestimmten Ablängsägen (11) jeweils in eine solche Richtung drehend zum Schnitt angetrieben werden, dass der untere Umfang, d.h. die dem Förderer (10) und dem Holzstück (17) zugewandte Seite, gegen die Bewegungsrichtung des Holzstücks läuft, dass ein der jeweiligen Ablängsäge (11) zugeordnetes nach unten ablenkendes Mittel (36) während des Absenkens der Ablängsäge in Förderrichtung vor der Ablängsäge (11) mit der Unterkante gegen die Oberkante des vom Förderer vorgeschobenen Holzstücks (17) geführt wird, wobei das abzulängende Holzstück während des Schnitts durch die Mitnehmer (13) des Förderers unter das nach unten ablenkende Mittel geschoben wird.

2. Vorrichtung zum Ablängen von Holzstücken (17) während des Zuschnitts mittels einer Anzahl von Ablängsägen (11), welche in einer Linie axial nebeneinander angeordnet sind und in einer mit einem Ablängwerk verbundenen Schneidestation schwenkbar an Armen (23) aufgehängt sind, wobei die Holzstücke rechtwinklig zu ihrer Länge durch einen Förderer (10) mit Mitnehmern (7) in einem von den Mitnehmern bestimmten gegenseitigen Abstand vorgeschoben werden, wobei eine zum Schneiden bestimmte Ablängsäge (11) durch Führungs- und Manövriervorrichtungen abgesenkt wird,
**dadurch gekennzeichnet, dass** die zum Ablängen bestimmte Ablängsäge (11) jeweils in eine solche Richtung drehend zum Schnitt angetrieben wird, dass der untere Umfang, d.h. die dem Förderer (10) und dem Holzstück (17) zugewandte Seite, gegen die Bewegungsrichtung des Holzstücks läuft, dass ein nach unten ablenkendes Mittel (36) gemeinsam mit der jeweiligen Ablängsäge (11) schwenkbar aufgehängt ist, um während dem Absenken gegen die Oberkante des abzulängenden Holzstücks (17) geführt zu werden, und dass die Unterkante einen Abschnitt aufweist, der vor die Schnittkante der Ablängsäge ragt und in Förderrichtung gesehen eine nach oben abgeschrägte Form aufweist.

3. Vorrichtung nach Anspruch 2, **dadurch gekennzeichnet, dass** die Abwärts-Schwenkbewegung des nach unten ablenkenden Mittels (36) gegenüber der Ablängsäge (11) durch Mittel (36', 23') begrenzt ist, welche zwischen dem nach unten ablenkenden Mittel und dem Arm (23) wirken.

4. Vorrichtung nach Anspruch 2 oder 3, **dadurch gekennzeichnet, dass** das nach unten ablenkende Mittel (36) eine Form mit auf beiden Seiten der Ablängsäge angeordneten Teilen aufweist.

5. Vorrichtung nach Anspruch 4, **dadurch gekennzeichnet, dass** die Unterkante (36") des nach unten ablenkenden Mittels (36) derart ausgebildet ist, dass der auf der einen Seite der Ablängsäge angeordnete Teil einen grösseren Abstand von der Oberfläche des abzulängenden Holzstücks aufweist als die Kante des auf der anderen Seite der Ablängsäge angeordneten Teils des nach unten ablenkenden Mittels (36).

6. Vorrichtung nach einem der Ansprüche 2 bis 5, **dadurch gekennzeichnet, dass** die Ausdehnung der Mitnehmer (13) des Förderers (10) quer zur Förderrichtung ungefähr gleich dem Abstand zwischen nebeneinanderliegenden Ablängsägen (11) ist.

7. Vorrichtung nach Anspruch 6, **dadurch gekennzeichnet, dass** der Förderer (10) ein Schritt-Kettenförderer ist.

8. Vorrichtung zum Schneiden mittels einer Anzahl von Ablängsägen (11), welche in einer mit einem Ablängwerk verbundenen Schneidestation axial nebeneinander angeordnet sind zum Beschneiden von Holzstücken (17), welche rechtwinklig zu ihrer Länge durch einen Förderer (10) mit Mitnehmern in einem von den Mitnehmern (13) bestimmten gegenseitigen Abstand vorgeschoben werden, wobei die Ablängsägen (11) jeweils an einem senkrecht schwenkbaren Arm (23) aufgehängt sind, der mit einem Rahmen (25) der Schneidestation verbunden ist und durch eine Führungs- und Steuervorrichtung von einer angehobenen inaktiven Stellung in eine abgesenkte Schneidestellung schwenkbar ist, **dadurch gekennzeichnet, dass** die Steuervorrichtung teilweise aus einem jeweils zwischen dem Arm (23) und dem Rahmen (25) angeordneten Stellzylinder (35) besteht, der die jeweilige Ablängsäge (11) in der angehobenen Stellung hält oder die Ablängsäge gesteuert von der Steuervorrichtung abzusenken gestattet, und teilweise aus einer innerhalb eines festen Bewegungsbereichs vorwärts und rückwärts drehbaren Welle (28), welche an einem Rahmen (25) abgestützt ist und radial nach aussen weisende Mitnehmer (30) aufweist, und durch die der jeweilige Arm (23) über eine Verbindung (29) verbunden ist, die das Absenken und Anheben der Ablängsägen (11) ermöglicht, wenn die Welle gedreht wird, wobei das Absenken der Ablängsägen vom Bewegungsbereich der Welle zwangsbestimmt und gesteuert wird.

9. Vorrichtung nach Anspruch 8, **dadurch gekennzeichnet, dass** die Stellzylinder (35) pneumatische Kolben- und Zylinderanordnungen sind, welche während dem Absenken und dem Schnitt der Ablängsäge (11) unter Druck gesetzt werden.

10. Vorrichtung nach Anspruch 8 oder 9, **dadurch gekennzeichnet, dass** die Verbindung (29) aus einer Kette besteht.

11. Vorrichtung nach einem der Ansprüche 8 bis 10, **dadurch gekennzeichnet, dass** der Antrieb der Welle (28) und des Förderers (10) durch einen Motor (31 ) erfolgt.

## Revendications

1. Procédé de tronçonnage de pièces de bois (17) pendant le découpage au moyen d'un nombre de tronçonneuses (11) disposées en ligne axialement l'une à côté de l'autre et suspendues de manière pivotante à des bras (23) dans une station de découpage reliée à un poste de tronçonnage, les pièces de bois étant avancées perpendiculairement à leur longueur par un convoyeur (10) équipé de tenons d'entraînement (7) à une distance l'une de l'autre déterminée par les tenons d'entraînement, une ou plusieurs tronçonneuses destinées à effectuer une coupe étant abaissées pour la coupe par des dispositifs de guidage et de manoeuvre,
**caractérisé en ce que** les tronçonneuses respectives (11) sont entraînées en rotation pour la coupe dans une direction telle que leur périphérie inférieure, en regard du convoyeur (10) et de la pièce de bois (17), évolue dans le sens opposé à la direction de mouvement de la pièce de bois, **en ce qu'**un moyen de déflexion vers le bas (36) associé à la tronçonneuse (11) respective est, pendant l'abaissement de la tronçonneuse, amené par son arête inférieure contre l'arête supérieure de la pièce de bois (17) avancée par le convoyeur en amont de la tronçonneuse (11), vue dans la direction de transport, la pièce de bois à tronçonner étant poussée sous le moyen de déflexion vers le bas par les tenons d'entraînement (13) du convoyeur pendant le découpage de la pièce de bois.

2. Dispositif de tronçonnage de pièces de bois (17) pendant le découpage au moyen d'un nombre de tronçonneuses (11) disposées en ligne axialement l'une à côté de l'autre et suspendues de manière pivotante à des bras (23) dans une station de découpage reliée à un poste de tronçonnage, les pièces de bois étant avancées perpendiculairement à leur longueur par un convoyeur (10) équipé de tenons d'entraînement (7) à une distance l'une de l'autre déterminée par les tenons d'entraînement, une tronçonneuse (11) destinée à effectuer une coupe étant abaissée pour la coupe par des dispositifs de guidage et de manoeuvre,
**caractérisé en ce que** la tronçonneuse (11) destinée à tronçonner est entraînée en rotation pour la coupe dans une direction telle que sa périphérie inférieure, en regard du convoyeur (10) et de la pièce de bois (17), évolue dans le sens opposé à la direction de mouvement de la pièce de bois, **en ce qu'**un moyen de déflexion vers le bas (36) est suspendu de sorte à pouvoir pivoter conjointement avec la tronçonneuse (11) respective pour être amené, pendant l'abaissement, contre l'arête supérieure de la pièce de bois (17) à tronçonner, et que l'arête inférieure est pourvue d'une partie s'étendant à l'avant de l'arête de coupe de la tronçonneuse et présente une forme inclinée vers le haut, vue contre la direction de transport.

3. Dispositif selon la revendication 2, **caractérisé en ce que** le mouvement de descente pivotant du moyen de déflexion vers le bas (36) relatif à la tronçonneuse (11) est limité par des moyens (36', 23') agissant entre le moyen de déflexion vers le bas et le bras (23).

4. Dispositif selon la revendication 2 ou 3, **caractérisé en ce que** le moyen de déflexion vers le bas (36) présente une forme avec des parties agencées des deux côtés de la tronçonneuse.

5. Dispositif selon la revendication 4, **caractérisé en ce que** l'arête inférieure (36") du moyen de déflexion vers le bas est agencée de telle sorte que la partie située d'un côté de la tronçonneuse se trouve à une plus grande distance de la surface supérieure de la pièce de bois à tronçonner que l'arête de la partie du moyen de déflexion vers le bas (36) située de l'autre côté de la tronçonneuse.

6. Dispositif selon l'une quelconque des revendications 2 à 5, **caractérisé en ce que** les tenons d'entraînement (13) du convoyeur (10) présentent une étendue transversalement à la direction du convoyeur qui est approximativement égale à la distance entre tronçonneuses (11) adjacentes.

7. Dispositif selon la revendication 6, **caractérisé en ce que** le convoyeur (10) est un convoyeur à chaîne par pas.

8. Dispositif de découpage au moyen d'un nombre de tronçonneuses (11) disposées en ligne axialement l'une à côté de l'autre dans une station de découpage reliée à un poste de tronçonnage pour couper à dimension des pièces de bois (17) qui sont avancées perpendiculairement à leur longueur, par un convoyeur (10) équipé de tenons d'entraînement (13), à une distance l'une de l'autre déterminée par les tenons d'entraînement, la tronçonneuse (11) respective étant suspendue à un bras (23) pouvant pivoter en direction verticale, relié à un bâti (25) de la station de découpage, afin d'être basculée d'une position levée inactive à une position abaissée de coupe par un dispositif de guidage et de commande, **caractérisé en ce que** le dispositif de commande est constitué, d'une part, d'un cylindre de commande (35) agencé chaque fois entre le bras (23) et le bâti (25) et destiné à maintenir la tronçonneuse (11) correspondante en position levée ou de permettre son abaissement sous la direction du dispositif de commande, et d'autre part, d'un axe (28) pouvant tourner en avant et en arrière dans une plage fixe de mouvement, soutenu par un bâti (25) et équipé de tenons d'entraînement (30) dirigés vers l'extérieur radialement, par l'intermédiaire desquels le bras correspondant (23) est relié au moyen d'un lien (29) permettant d'abaisser et de soulever les tronçonneuses (11) en tournant ledit axe, l'abaissement des tronçonneuses étant forcé et commandé par la plage de mouvement de l'axe.

9. Dispositif selon la revendication 8, **caractérisé en ce que** le cylindre de commande (35) correspondant est un ensemble piston-cylindre pneumatique qui est mis sous pression pendant l'abaissement de la tronçonneuse (11) et la coupe effectuée par celle-ci.

10. Dispositif selon la revendication 8 ou 9, **caractérisé en ce que** ledit lien est constitué d'une chaîne (29).

11. Dispositif selon l'une quelconque des revendications 8 à 10, **caractérisé en ce que** l'axe (28) et le convoyeur (10) sont entraînés par un moteur (31).
